## Europäisches Patentamt
## European Patent Office
## Office européen des brevets

(19)

(11) Numéro de publication: **0 249 517**
**A1**

(12) # DEMANDE DE BREVET EUROPEEN

(21) Numéro de dépôt: 87401139.8

(22) Date de dépôt: 21.05.87

(51) Int. Cl.⁴: **C 08 L 61/06**
C 08 K 5/55, C 08 K 13/02,
C 08 J 5/24
//(C08K13/02,3:38,5:17)

(30) Priorité: 05.06.86 FR 8608127

(43) Date de publication de la demande:
16.12.87 Bulletin 87/51

(84) Etats contractants désignés:
AT BE CH DE ES GB IT LI LU NL SE

(71) Demandeur: Société Chimique des Charbonnages S.A.
Tour Aurore Place des Reflets
F-92080 Paris La Défense 2 Cédex 5 (FR)

(72) Inventeur: Boinot, François
54, rue Henri Martin
F-62800 Lievin (FR)

Cousin, Michel
81, rue Wattiez
F-62218 Loison s/Lens (FR)

François, Pierre-Michel
Résidence les Fleurantines Rue Béranger
F-62400 Bethune (FR)

Michel-Dansac, François
18, rue Voltaire
F-62210 Bully-Les-Mines (FR)

(74) Mandataire: Rieux, Michel
SOCIETE CHIMIQUE DES CHARBONNAGES S.A. Service
Propriété Industrielle Tour Aurore Place des Reflets
Cédex no. 5
F-92080 Paris la Défense 2 (FR)

(54) Nouvelles compositions résineuses à base de résines phénoliques.

(57) Nouvelles compositions de résines phénoliques contenant un additif constitué de triéthanolamine borate ou du mélange amine-dérivé boré oxygéné.
Applications à la fabrication de mats préimprégnés.

EP 0 249 517 A1

Bundesdruckerei Berlin

**Description**

Nouvelles compositions de résines phénoliques.

La présente invention concerne de nouvelles compositions résineuses à base de résines phénoliques, elle a plus particulièrement pour objet des compositions de résines phénoliques particulièrement adaptées pour la fabrication de "mats préimprégnés phénoliques".

Les préimprégnés sont des matériaux mixtes que l'on prépare à partir de résines thermodurcissables et de renforts et éventuellement de charges. Le renfort utilisé est à l'état de fibres telles que fibres cellulosiques ou fibres de verre en particulier rovings de fibres de verre, de non-tissé par exemple en polyester de haut poids moléculaire, en chlorure de polyvinyle, de mat de fibres de verre ou tissu par exemple en polyamide aromatique, en verre ou en amiante. Ces matériaux préimprégnés présentent l'avantage de pouvoir être moulés directement à la presse sans qu'il soit nécessaire de préparer au préalable un mélange constitué de résine, de catalyseurs, de charges et de pigments. Les préimprégnés peuvent être divisés en deux catégories : d'une part, les préimprégnés "dits sans fluage", et d'autre part, les préimprégnés "dits avec fluage". Les préimprégnés "sans fluage" sont généralement constitués uniquement par des renforts de fibres de verre imprégnés d'une résine convenable conduite à un stade approprié de polymérisation partielle, stade dit "B". A ce stade là, les résines ne poissent pratiquement plus mais sont encore solubles et fusibles. Un tel matériau mixte mis sous presse chauffée permet un déplacement de la résine entre les fibres et conduit à une distribution uniforme du verre et de la résine. Après fermeture du moule, la résine est complètement durcie. On fabrique les préimprégnés sans fluage à partir de résines epoxy, de résines formo-phénoliques et aussi de résines polyesters à base de diallyl phtalate. De tels matériaux permettent des applications particulièrement limitées car ils présentent le plus souvent l'inconvénient de se désolidariser lors de la mise en oeuvre : ils sont par exemple utilisés pour la fabrication de circuits imprimés.

Les préimprégnés "à fluage" connus appelés le plus souvent "mats préimprégnés" sont jusqu'à présent préparés uniquement à partir d'une seule catégorie de résines à savoir les résines polyesters. Suivant la technique de fabrication mise en oeuvre, on distingue en particulier deux variétés de "mats préimprégnés".

Les pré-imprégnés S M C (en anglais sheet molding compound) sont des matériaux mixtes constitués d'une nappe de fils de verre coupés, préimprégnée de résine chargée, pigmentée et catalysée. Ils se présentent entre deux pellicules filmogènes (par exemple polyéthylène) ce qui permet une manipulation aisée. Ils sont ensuite mis en oeuvre par moulage par compression.

Les composés de moulage dans la masse (en anglais bulk moulding compound : BMC) sont des mélanges constitués de résine thermodurcissable, de charge et de fils de verre coupés : ils se présentent en vrac ou en boudin prêt à l'emploi.

Le mat préimprégné ainsi obtenu présente après murissement à la chaleur une consistance voisine de celle du cuir ou d'une toile cirée. Après stockage dans une chambre de mûrissement le mat préimprégné ainsi obtenu peut être stocké pendant environ trois mois, période durant laquelle il peut être utilisé par moulage à chaud et sous pression.

La difficulté majeure qui doit être surmontée pour fabriquer ces mats préimprégnés à base de résines polyester est de disposer de résine qui soit assez fluide pour pouvoir imprégner le tapis de fils de verre coupés mais dont l'évolution de la viscosité durant les premières 48 heures (période au bout de laquelle la viscosité ne doit pratiquement plus varier à température ambiante) soit assez rapide afin de pouvoir obtenir un mat préimprégné qui présente la consistance désirée et qui doit être voisine de celle du cuir ou de celle d'une toile cirée comme indiqué ci-dessus. On voit donc qu'il existe pratiquement deux problèmes antagonistes à résoudre. Pour résoudre de tels problèmes, il est connu d'ajouter à la résine polyester un épaississant choisi parmi des oxydes d'alcalino-terreux tel que l'oxyde de magnésium. L'addition d'un tel composé à la résine polyester permet d'obtenir une résine présentant une viscosité souhaitée mais aussi une stabilité suffisante qui permet à la résine de ne pas épaissir trop rapidement sous peine d'obtenir une imprégnation médiocre des tapis de fils de verre coupés.

Il est connu par la demande française 84.12277 du 3 Août 1984 déposée par la demanderesse de fabriquer des compositions pâteuses convenant pour la fabrication de mats préimprégnés phénoliques par la mise en oeuvre dans le mélange de résines phénoliques constitué de résol, de charge, de pigments et d'agents durcisseurs d'additif constitué d'au moins 20% en poids par rapport au poids total de l'additif d'un métaborate alcalino-terreux.

On aurait pu penser que la simple transposition des métaborates alcalino-terreux par des borates organiques tels que des esters boriques, par exemple triéthyl borate, tri-2-méthoxy éthyl borate, aurait permis d'obtenir des compositions pâteuses de résines phénoliques convenant pour la fabrication de mats préimprégnés phénoliques. Malheureusement, il n'en est rien. On constate en effet que l'addition de ces produits organiques borés aux résines phénoliques conduit en une très rapide évolution de la viscosité qui se traduit par une gélification de la solution résineuse en quelques jours.

La présente invention concerne de nouvelles compositions de résines phénoliques convenant pour la fabrication de mats préimprégnés phénoliques selon lesquelles les compositions utilisées pour l'imprégnation des mats de fils sont constituées de résines formo-phénoliques du type résols, de charges, de pigments et d'agents durcisseurs caractér sées en ce que ces compositions contiennent un additif constitué d'un dérivé organique choisi parmi la triéthanolamine borate ou du mélange constitué d'une amine et d'un dérivé boré

2

oxygéné minéral choisi parmi l'acide borique ou l'anhydride borique.

On a en effet trouvé que la mise en oeuvre d'un tel additif permet d'obtenir une composition résineuse homogène, une composition dont la viscosité évolue durant les premières quarante huit heures pour se stabiliser ensuite. On obtient ainsi une composition douée de propriétés telles qu'elle permet la fabrication de mats préimprégnés.

Selon l'invention les compositions résineuses à base de résines phénoliques contiennent au plus 30% et au moins 1% en poids par rapport au poids de solution de résine phénolique d'un dérivé organique choisi parmi la triéthanolamine borate ou du mélange constitué d'une amine et d'un dérivé boré oxygéné minéral. Lorsqu'on utilise un mélange constitué d'une amine et d'un dérivé boré oxygéné minéral on met en oeuvre un mélange présentant au plus 70% en poids d'amine. Les amines qui conviennent sont selon l'invention la butylamine, la metaxylène diamine, la diéthylamine, la triéthylamine, la monoéthylamine, la diéthanolamine, la triéthanolamine ou l'aniline.

Selon l'invention les compositions résineuses contiennent au plus 30% en poids d'un dérivé organique choisi parmi les composés cités ci-dessus. Lorsque l'on met un mélange constitué d'une amine et d'un dérivé boré oxygéné minéral les quantités mises en oeuvre et exprimées en rapport molaire sont telles que le rapport

$$\frac{\text{atomes de bore}}{\text{atomes d'azote}}$$

est compris entre 1/4 et 4 et de préférence entre 1/2 et 2.

Les compositions de résines, objet de l'invention, sont préparées en ajoutant l'additif à la résine phénolique.

De façon connue, le durcissement des résines phénoliques est réalisé à l'aide de solutions de catalyseurs constituées de solvant et d'un acide : comme acide on peut citer en particulier l'acide paratoluène sulfonique, l'acide orthotoluène sulfonique, l'acide benzène sulfonique et l'acide xylène sulfonique. Comme solvants organiques, on entend les composés à fonctions alcool : méthanol, éthanol, propanol, isopropanol, ainsi que les polyols comme le glycérol, le dipropylène-glycol et le triéthylène-glycol. Les catalyseurs latents connus conviennent plus particulièrement pour la fabrication des compositions conformes à l'invention. Par catalyseurs latents, on entend des catalyseurs qui sont pratiquement inactifs à basse température, mais qui deviennent catalytiquement actifs à température élevée, nécessaire à la polycondensation de la résine. Comme catalyseurs latents, on peut citer par exemple les solutions constituées d'un ester alcoylé, d'un acide toluène sulfonique, d'un solvant organique et d'un acide toluène sulfonique ou d'acide sulfurique concentré. Les quantités de durcisseurs utilisées sont celles employées classiquement pour le durcissement de résols : ces quantités sont comprises entre 5 et 50 % en poids par rapport au poids de la solution de résol et de préférence entre 10 et 40 %.

Les résols utilisés pour la fabrication des compositions conformes à l'invention sont des résols connus préparés par exemple par condensation de formol sur le phénol en présence d'un catalyseur alcalin suivi d'une neutralisation à l'aide d'un acide. Ils présentent un rapport molaire F/P compris entre 1,2 et 2,5 et contiennent éventuellement des additifs tels que plastifiants, tensio-actifs, charges telles que silice, kaolin, hydroxyde d'aluminium.

Les compositions de résines phénoliques objet de l'invention conviennent particulièrement pour la fabrication de mats préimprégnés phénoliques. Pour la fabrication des préimprégnés, on utilise de façon connue des renforts constitués des fils coupés de fibres de verre, des rovings de fils de verre coupés, des tissus de polyamide, des fibres cellulosiques ou des fibres de carbone . La quantité de fibres utilisées est telle que le mat préimprégné fini en contient au plus 70 % en poids par rapport au poids total du matériau fini.

Les compositions de résines phénoliques objet de l'invention, permettent de fabriquer des mats préimprégnés à très bon fluage, elles permettent également d'obtenir des mats préimprégnés phénoliques qui peuvent être stockés pendant au moins 2 mois avant moulage à température ambiante. Par rapport aux mats préimprégnés connus fabriqués à partir de résines polyester insaturé, les mats préimprégnés phénoliques ont l'avantage de présenter de meilleures résistances au feu, à la combustion, ce qui élargit leurs champs d'application. De plus, le matériau fini à une meilleure tenue thermique.

Les mats préimprégnés obtenus à partir des compositions de résine objet de l'invention peuvent être mis en oeuvre après stockage, de façon connue, en les soumettant par exemple dans des presses à des pressions comprises entre 40 et 140 bars pendant 20 à 200 secondes par millimètre d'épaisseur à une température comprise entre 110 et 160°C.

Les exemples suivants illustrent la présente invention.

EXEMPLE 1

On utilise 100 parties en poids d'une résine phénolique qui présente les caractéristiques suivantes :
- rapport molaire $\frac{F}{P} = 1,5$
- extrait sec : 80%
- réactivité : 110°C
- viscosité à 20°C : 80 Pa.s

On ajoute à cette résine 26,6 parties d'un catalyseur constitué d'un mélange de méthanol et d'acide paratoluène-sulfonique fabriqué à partir d'une mole de méthanol et d'une mole d'acide paratoluène-sulfonique. Puis on ajoute au milieu réactionnel 17,4 parties de triéthanolamine borate. On obtient une composition homogène qui présente une viscosité de 250 Pa.s. Elle évolue ensuite de la façon suivante :
. au bout d'un jour : 4.000 Pa.s
. au bout de 3 jours : 2.000 Pa.s
. au bout de 15 jours : 5.000 Pa.s
. au bout de 30 jours : 15.000 Pa.s

EXEMPLE 2

On met en oeuvre 100 parties en poids d'une résine phénolique qui présente les caractéristiques suivantes :
- Rapport molaire $\frac{F}{P}$ = 1,5
- extrait sec : 80%
- réactivité : 110°C
- viscosité à 20°C : 80 Pa.s

On ajoute à cette résine 26,6 parties en poids du même catalyseur de l'exemple 1 et 6,84 parties en poids d'acide borique et 16,53 parties en poids de triéthanolamine. On obtient une composition homogène qui présente une viscosité de 40 Pa.s :
. au bout de 1 jour la viscosité est de 210 Pa.s
. au bout de 3 jours la viscosité est de 230 Pa.s
. au bout de 8 jours la viscosité est de 780 Pa.s
. au bout de 15 jours la viscosité est de 1.320 Pa.s
. au bout de 20 jours la viscosité est de 5.600 Pa.s
. au bout de 22 jours la viscosité est de 17.500 Pa.s

EXEMPLE 3

L'exemple 2 est répété mais en remplaçant la triéthanolamine par de la diéthylamine, de la butylamine, de la metaxylène diamine et par de la triéthylamine. Les quantités d'acide borique mis en oeuvre sont les mêmes que celles utilisées dans l'exemple 2. On met en oeuvre en même quantité le même catalyseur utilisé dans l'exemple 2.

Le tableau 1 indique les résultats obtenus.

EXEMPLE 4

L'exemple 3 est répété en mettant en oeuvre la même résine, et en utilisant 16,53 parties de triéthanolamine et 3,85 parties d'anhydride borique. La viscosité évolue de la façon suivante :
. au bout de 1 jour elle est de 265 Pa.s
. au bout de 3 jours est est de 280 Pa.s
. au bout de 7 jours est est de 510 Pa.s
. au bout de 11 jours elle est de 960 Pa.s
. au bout de 16 jours elle est de 1.260 Pa.s
. au bout de 31 jours elle est de 10.200 Pa.s

EXEMPLE 5

A titre comparatif, l'exemple 1 est répété, mais en remplaçant la triéthanolamine borate par divers esters borés.

Le tableau 2 résume les résultats obtenus

EXEMPLE 6

On met en oeuvre 100 parties en poids de la résine de l'exemple 1 additionnée de 80 parties d'une charge minérale ainsi que le même catalyseur et 16,53 parties en poids de triéthanolamine et 6,84 parties d'acide borique. La viscosité initiale est de 62 Pa.s, elle évolue ensuite de la façon suivante :
. après 2 jours : 1.500 Pa.s
. après 4 jours : 5.000 Pa.s
. après 7 jours : 20.000 Pa.s

On prépare à partir de cette composition un compound à partir de 80 parties de la composition et 20 parties de fibres de verre.

Le produit obtenu qui est stockable est moulé à une pression de 20 bars à une température de 150°C durant 6 minutes. Après 3 jours de mûrissement on obtient après moulage un produit de 4 mm d'épaisseur qui présente les caractéristiques suivantes :
- Contrainte de rupture en flexion (Norme NFT 51001) : 55 MPa
- Module en flexion (Norme NFT 51001) : 3.700 MPa

| Amine, quantité parties en poids | Viscosité Pa.s | | | | | |
|---|---|---|---|---|---|---|
| | 1 jour | 3 jour | 7 jour | 11 jour | 16 jour | 24 jour |
| Diéthylamine : 8,08 | 55 | 100 | 142 | 260 | 332 | 12800 |
| Butylamine : 8,08 | 50 | 120 | 152 | 230 | 305 | 6500 |
| Metaxylène diamine 7,86 | 17 | 20 | 122 | 230 | 328 | > 16000 |
| Aniline : 10,29 | 600 | | | 6320 | >16000 | |
| Triéthylamine : 11,18 | 25 | 29 | 54 | 90 | 100 | 540 |
| Diéthanol amine : 11,62 | 27,2 | | | 71 | | 452 |
| Monoéthanolamine : 6,75 | 45 | 120 | 390 | 840 | 1850 | > 16000 |

0 249 517

TABLEAU 2

| Ester - quantité parties en poids | Viscosité Pa.s | | | | | |
|---|---|---|---|---|---|---|
| | To (jour) | $T_4$ | $T_5$ | $T_6$ | $T_{15}$ | $T_{38}$ |
| Triéthyl-borate : 16,15 | 2,7 | | | masse caoutchouti-que | | |
| Triphényl borane phosphine : 30,56 | 40 | | masse caoutchouti-que | | | |
| Méthoxyboroxine 6,4 | 4,7 | masse caoutchouti-que | | | | |
| Triéthylborate :16,5 Triéthanolamine:16,5 | 100 | | | | 26 | 100 |

0 249 517

**Revendications**

1. Nouvelles compositions de résines phénoliques convenant pour la fabrication de mats préimprégnés phénoliques selon lesquelles les compositions utilisées pour l'imprégnation des mats de fils sont constituées de résines formo-phénoliques du type résols, de charges, de pigments et d'agents durcisseurs caractérisées en ce que ces compositions contiennent un additif constitué d'un dérivé organique choisi parmi la triéthanolamine borate ou du mélange constitué d'une amine et d'un dérivé boré oxygéné minéral choisi parmi l'acide borique ou l'anhydride borique, le rapport molaire

EMI PA = 9 FR = 1 HE = 10 WI = 40 TI = UDF

du mélange dérivé boré oxygéné minéral-amine étant compris entre 1/4 et 4.

2. Nouvelles compositions selon la revendication 1, caractérisées en ce que le rapport molaire

EMI PA = 9 FR = 2 HE = 10 WI = 40 TI = UDF

du mélange dérivé boré oxygéné minéral-amine est compris entre 1/2 et 2.

3. Nouvelles compositions selon la revendication 1, caractérisées en ce qu'elles contiennent au plus 30% et au moins 1% par rapport au poids d'un dérivé organique choisi parmi la triéthanolamine borate ou du mélange constitué d'une amine et d'un dérivé boré oxygéné minéral.

4. Nouvelles compositions selon les revendications 1 et 2, caractérisées en ce que le mélange amine-dérivé boré oxygéné minéral est tel qu'il contient au plus 70% en poids d'amine.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | DE-A-1 569 265 (PAG PRESSWERK AG) <br> * Revendications; page 7, lignes 16-25; page 8, lignes 10-19 * | 1 | C 08 L 61/06 <br> C 08 K 5/55 <br> C 08 K 13/02 <br> C 08 J 5/24 // <br> (C 08 K 13/02 <br> C 08 K 3:38 <br> C 08 K 5:17 ) |
| A,D | EP-A-0 176 378 (CHARBONNAGES) <br> * Revendications * | 1 | |

DOMAINES TECHNIQUES
RECHERCHES (Int. Cl.4)

C 08 K
C 08 L
C 08 J

Le présent rapport de recherche a été établi pour toutes les revendications

| Lieu de la recherche | Date d'achèvement de la recherche | Examinateur |
|---|---|---|
| LA HAYE | 14-09-1987 | HOFFMANN K.W. |